# EUROPÄISCHE PATENTSCHRIFT

(11) **EP 0 865 586 B1**
(45) Veröffentlichungstag und Bekanntmachung des Hinweises auf die Patenterteilung: **17.05.2000**
(21) Anmeldenummer: 96934319.3
(22) Anmeldetag: 13.11.1996
(51) Int. Cl.: F16L 33/24, F16L 33/00

(54) **ROHRVERBINDUNG SOWIE VERFAHREN ZUR HERSTELLUNG EINER ROHRVERBINDUNG**
PIPE CONNECTION AND METHOD OF PRODUCING SAME
RACCORD DE TUYAUTERIE ET SON PROCEDE D'OBTENTION

(30) Priorität: 04.12.1995 CH 341895
(43) Veröffentlichungstag der Anmeldung: 23.09.1998
(73) Patentinhaber: Ecoflex S.A., 1203 Genève (CH)
(72) Erfinder: JENEWEIN, Hermann, CH-1203 Genève (CH)
(74) Vertreter: Wegmann, Urs
(86) Internationale Anmeldenummer: CH9600407
(87) Internationale Veröffentlichungsnummer: WO9721053

(56) Entgegenhaltungen:
- GB-A- 2 089 919

## Beschreibung

Die vorliegende Erfindung betrifft eine Rohrverbindung nach dem Oberbegriff von Anspruch 1, ein Verfahren zur Herstellung einer Rohrverbindung nach dem Oberbegriff von Anspruch 9 sowie Verwendung der Rohrverbindung nach einem der Ansprüche 1 bis 18.

Flexible Kunststoffrohre finden heute in vielen technischen Bereichen Anwendung. Zur Führung von Medien aller Art werden solche Rohre auf vielfältige Art eingesetzt. Oft werden solche Rohre verwendet als Kabelschutz beziehungsweise als Einzugsführung von Kabeln. Besondere Anforderungen an solche Kunststoffrohre werden beim Einsatz in der Energietechnik gestellt an die Temperaturfestigkeit, chemische Beständigkeit, Flexibilität, Lebensdauer, Montagefreundlichkeit usw. wie dies beispielsweise bei Wärmetauscheranwendungen oder auch Heizungsanwendungen der Fall ist.

Ein Anwendungsbereich mit besonders hohen Anforderungen im energietechnischen Bereich sind Kaminauskleidungen. Vor allem bei alten Kaminen die Defekte aufweisen, wie Versottungen, Korrosionen usw. besteht die Notwendigkeit die Kamine zu reparieren beziehungsweise zu sanieren.

Aber auch die modernen Feuerungstechniken, welche für energiesparende Massnahmen notwendig sind, erfordern in vielen Fällen neue Kaminzüge. Insbesondere moderne Niedertemperaturtechniken verlangen nach korrosionsbeständigen Systemen. Dazu wird es bei nachträglicher Sanierung einer energietechnischen Anlage oft notwendig sein, das Kamin nachträglich entsprechend zu erneuern. Aber auch bei Neuanlagen sind kostengünstige und dauerhafte Lösungen vorteilhaft. Derzeit werden Auskleidungen und Sanierungen mittels Edelstahlrohren, keramischen Einsätzen, Zementschleuderguss oder aber auch mit gewickelten Kunststoffbändern realisiert. Die bekannten Auskleidungen haben den Nachteil starr und unflexibel zu sein und erfordern einen hohen Montageaufwand. Insbesondere bei Altbausanierungen ist dies sehr nachteilig, da häufig gekrümmte Kaminverläufe auftreten, welche eine Neuerrichtung desselben unumgänglich machen. Bei Rohren mit gewickelten Kunststoffbändern ist nachteilig, dass die Verschweissungen der Bänder oft zum Aufreissen beim Einziehen dieser Auskleidung in das Kamin führt.

Ein weiterer Anwendungsbereich sind Schutzrohre für Verkabelungen. Besonders in der Flugzeugindustrie, bei Flügel-, Fahrwerks-, Cockpit- und Kabinenverkabelungen wo starke Vibrationen auftreten, müssen zuverlässige Schutzrohrsysteme eingesetzt werden. Vor allem die Verbindungsstellen sind hier besonders kritisch. Kabelschutzrohre werden auch im Automobilbereich eingesetzt, in der Haustechnik und in industriellen Anwendungen.
Ein weiterer Anwendungsbereich ist der Transport von Medien aller Art beispielsweise in der Lebensmitteltechnik, Chemie, Wärmetechnik und insbesondere bei Wärmetauscheranordnungen und Hydraulikanwendungen.

Die vorerwähnten Anwendungen verlangen zuverlässige Rohrverbindungssysteme. Rohre beziehungsweise Schläuche können nicht beliebig lang an einem Stück erstellt werden.

Ausserdem müssen Rohre aus Gründen der Montage- und Handhabungsproblematik oft in passende Längen unterteilt werden. Daraus ergeben sich vor allem bei komplexeren Rohrsystemen sehr viele Übergangsstellen welche ein Zuverlässigkeitsproblem und ein Wirtschaftlichkeitsfaktor darstellen.

Aus der WO 95/16873 sind Beispiele bekannt geworden für die Verwendung von konvolutierten Rohren und dessen Rohrverbindungen. Solche konvolutierte Rohre und deren Rohrverbindungen finden dort Anwendung für den Transport chemisch agressiver Medien, sowie als Kabelschutzrohre mit staubdichten gegen Vibrationen formschlüssig gesicherten Verbindungen in der Fahrzeug-, Flugzeug- und Raumfahrtindustrie, sowie als flexible gasdichte Kaminauskleidungssysteme. Das Prinzip der Konvolutierungsspiralierung solcher Wellrohre birgt durch die endlos verlaufende Spirale des Rohres Dichtungsprobleme in den Anschlussbereichen in sich, die bislang nur mittels Verwendung entsprechender Dichtungen, beispielsweise elastomerisch, bandförmig, pastöse Flüssigkeiten wie Silikon usw., gelöst werden konnten. Dichtende Rohranschlüsse verlangten beispielsweise verwendungsaufwendige Muffensysteme zur Gewährleistung der dichtenden Formschlüssigkeit der Verbindung. Diese Verbindungstechnik ist nachteilig, da sie, wenn sie einmal hergestellt worden ist, irreversibel ist, wobei sie zwar störungsfrei geöffnet werden kann, nicht jedoch wieder mediumdicht hergestellt werden kann. In vielen Fällen ist aber das Lösen der Verbindung weniger von Bedeutung, da diese bis zum Erreichen der Lebensdauer des gesamten Bauteiles nicht gelöst werden soll. Hierfür ist deshalb die Sicherheit der Verbindung verbunden mit hoher wirtschaftlicher Realisierbarkeit von grosser Wichtigkeit.

Die vorliegende Erfindung hat sich zur Aufgabe gemacht, die Nachteile des Standes der Technik zu beseitigen. Insbesondere eine zuverlässige Lösung für Rohrverbindungen zu realisieren für konvolutierte Kunststoffrohre, welche einfach und rasch zu montieren sind bei hoher Wirtschaftlichkeit. Diese Aufgabe wird erfindungsgemäss durch die Merkmale im Kennzeichen des Patentanspruches 1 gelöst, weiter durch das Verfahren ausgebildet nach dem Kennzeichen von Anspruch 9. Erfindungsgemäss wird die Aufgabe dadurch gelöst, dass ein spiraliges Vollkunststoffrohr beziehungsweise ein spiraliges Wellrohr, welches in der Fachsprache als konvolutiert bezeichnet wird, auf ein Rohranschlussstück, welches ein Gegengewinde trägt, so auf das Rohranschlussstück aufgedreht wird, dass das konvolutierte Rohr über das Gewindeteil hinausgedreht wird und sich mechanisch deformiert, das heisst eine Streckung der Konvolutionen erzwungen wird derart, dass das konvolutierte Rohr in diesem gewindefreien Abschnitt zu einem geglätteten Rohr transformiert wird und an der Rohranschlussstückaussenwand dichtend anliegt.

Somit wird die dichtungsproblematische Endlosspirale des konvolutierten Rohres automatisch unterbrochen. Die Steigung des Gegengewindes am Rohranschlussstück verläuft vorzugsweise progressiv, um während des Aufdrehens des konvolutierten Rohres auf das Verbindungsteil die Formänderung zu beschleunigen.

Nach dem Aufdrehen des konvolutierten Rohres auf das Rohranschlussstück wird das Rohrende vorteilhafterweise thermobehandelt, womit das Rohr auf das Rohranschlussstück form- und kraftschlüssig aufschrumpft. Thermoplastische konvolutierte Rohre besitzen die Eigenschaft, dass bei der Herstellung mittels thermoplastischer Extrusion, so wie der Umformung der Schmelze zu einem konvolutierten Extrudat, ein definierter biaxialer Orientierungszustand eingestellt wird, der nach erfolgter Formgebung in einem derartigen Rohr eingefroren wird. Ein solcher Zustand wird in der Fachsprache auch als Extrudat mit enthaltenem Memory-Effekt bezeichnet, das heisst, dieser Orientierungszustand kann unter Wärmeeinwirkung irreversibel entspannt werden. Solche Vorgänge sind dann mit unvermeidlichen Formänderungen des Extrudates verbunden, typischerweise als Schrumpfungen. Dieser Effekt kann zur Erreichung der Dichtigkeit der Verbindugn genutzt werden, derart, dass durch Erwärmen des noch konvolutiert und mechanisch geglätteten Abschnittes diese unter Ausnütztung des vorgängig beschriebenen Memory-Effektes irreversibel auf das Verbindungsteil thermisch aufgeschrumpft wird. Die Schrumpfkräfte können durch entsprechende Dimensionierung und Temperaturbehandlung gezielt so eingestellt werden, dass zwischen Rohr und Verbindungsteil beziehungsweise Rohranschlussstück, Dichtigkeit erwirkt werden kann.

Im Glatteilbereich des Rohranschlussstückes hinter dem Gegengewinde können vorteilhafterweise Hindernisse vorgesehen werden, um die Formschlüssigkeit der Verbindung zu gewährleisten, das heisst die Verbindung ist dann gesichert gegen Öffnung durch Verdrehen. Beispielsweise können solche Hindernisse in der Glättungszone des Rohranschlussstückes als ringartige Vertiefungen oder rändelartig ausgeführt werden oder vorzugsweise noppenartig. Noppen sind vorzugsweise gegeneinander versetzt angeordnet. Nach dem Aufdrehen und mechanischen Glätten des konvolutierten Rohres über diesem Bereich wird nun nach Erwärmen des Rohres das konvolutierte Rohr auf das Rohranschlussstück aufschrumpfen und sich über die Hindernisse formschlüssig anlegen.

Um das Verstrecken bzw. die Formänderung des Rohres beim Eindrehen besonders gut zu erzwingen wird das Gegengewinde vorzugsweise leicht konisch ausgebildet. Es hat sich gezeigt, dass hierbei ein eingeschlossener Winkel des Gewindes von 0 bis 30° besonders geeignet ist. Das Rohr lässt sich dann rasch gut mit der gewünschten Formänderung und Glättung eindrehen.

Günstig und kostensparend lässt sich das Rohranschlussstück mit Vorteil als gedrücktes Blechteil, beispielsweise aus rostfreiem Stahl, ausführen. Selbstverständlich kann aber das Rohranschlussstück auch massiv ausgebildet werden, beispielsweise auch aus Kunststoff.

Um das konvolutierte Rohr leicht aufdrehen zu können und entsprechend durch überdrehen über das Gewinde hinaus mechanisch deformieren und glätten zu können, ist es vorteilhaft, wenn zwischen das konvolutierte Rohr und das Rohranschlusstück ein Gleitmittel eingebracht wird. Beispielsweise kann dies ein metallisches Gleitmittel sein, wie eine Gleitbeschichtung des einen und/oder anderen Teiles. Das Gleitmittel kann aber auch flüssig sein, pastös oder pulverförmig. Ausserdem kann das Gleitmittel auch als Additiv im Kunststoff des Rohranschlussstückes eingebettet sein. Das Additiv kann bespielsweise aus einem thermoplastischen Kunststoff bestehen. Besonders gute Ergebnisse werden erreicht, wenn ein PTFE-Mikropulver im Kunststoffteil eingebracht ist. Gute Ergebnisse werden erreicht, wenn das Mikropulver max. 5% Gewichtsanteil gegenüber dem Kunststoffrohranschlussstück aufweist und das Rohranschlussstück als Spritzteil ausgeführt ist.

Für die erfinderische Verbindungstechnik sind konvolutierte Kunststoffrohre geeignet, die aus einem thermoplastischen Kunststoff bestehen, bei welchem das konvolutierte Rohr mit definiert eingestelltem Memory-Effekt gefertigt werden kann. Insbesondere sind thermoplastische Kunststoffe geeignet wie Polyolefine, wie PE-Weich, PP, deren Homo- und Copolymerisate oder PVC oder technische Thermoplaste wie PA, POM, PC, sowie insbesondere Fluorpolymere, wie insbesondere PTFE,PPVE modifiziertes PTFE, FEP, PCTFE, ETFE, PFA, MFA, PVDF, wobei es sich beim FEP um Co- und Terpolymere und beim PVDF um Homo- und Copolymere handelt. Kombinationen von den vorerwähnten thermoplastischen Kunststoffen in Form coextrudierter oder durch Lamination hergestellter Rohre sind ebenfalls möglich.

Für das Rohranschlussstück beziehungsweise Verbindungsstück mit dem Gegengewinde und allenfalls mit einem Gewinde, welches eine degressive Gewindetiefe und eine progressive Gewindesteigung aufweist, sind als Materialien Thermoplaste oder Metalle verwendbar. Die Herstellung des Rohranschlussstückes aus einem Thermoplast kann beispielsweise mit einem Spritzgussverfahren erfolgen. Wird das Stück aus Metall gefertigt, kann dies beispielsweise mit einem Druckguss erfolgen oder aber vorzugsweise aus einem Blech geformt werden, wobei dann die erforderlichen Gewinde und Hindernisse durch Metalldruckung erzeugt werden. Rohranschlussstücke können verschieden ausgebildet sein je nach Zweck der Verbindung beispielsweise als Anschlussstutzen, als T-Stück, als Muffe, als Bogen usw.

Das Aufdrehen des konvolutierten Rohres auf das Gegengewinde des Rohranschlussstückes mit anschliessendem Glättungsdeformieren wird erleichtert, wenn das Rohr vorgewärmt wird. Besonders gute Ergebnisse werden erreicht, wenn die Temperatur weiter erhöht wird, wobei diese bis maximal 30 bis 50°C unter der Haupterweichungstemperatur des für das konvolutierte Rohr verwendeten Thermoplastes reichen darf. Diese Vorerwärmungszeit ist sehr kurz, vorzugsweise maximal bis zu zwei Minuten.

Wenn das Rohr aufgedreht ist und in der richtigen Position geglättet am Rohranschlussstück über den Hindernissen aufliegt, wird das Rohr durch weiteres Erhöhen der Temperatur aufgeschrumpft und somit dichtend gesichert. Hierbei soll die Temperatur höchstens einen maximalen Wert erreichen, welcher 5 bis 10°C unter dem Schmelzpunkt des verwendeten Kunststoffes liegt. Hierdurch wird, wie bereits erwähnt, durch den im Rohr enthaltenen Memory-Effekt das Rohr irreversibel entspannt und dieses auf dem Rohranschlussstück form- und kraftschlüssig gesichert. Die wichtigsten Eigenschaften der entsprechenden Kunststoffe sind beispielsweise aufgelistet in der Tabelle L auf Seite 559 in "Die Kunststoffe und ihre Eigenschaften" von H.Domininghaus, Hanser Verlag 1976, ISBN 3-18-400 342-6, wobei dort insbesondere die Haupterweichungsbereiche beziehungsweise die Schmelzpunkte von Kunststoffen zu beachten sind. Materialien, die dort nicht aufgeführt sind wie beispielsweise Fluorpolymere haben beispielsweise folgende Haupterweichungsbereiche nach DSC (Differential scanning calorimetry):
- PFA:: 285 bis 305°C
- MFA:: 265 bis 295°C
- PVDF:: 140 bis 150°C

Die gängige Messmethode nach DSC ist mit den in der Tabelle L erzielten Messwerten für die Haupterweichungsbereiche im wesentlichen korrespondierend.

Die erfindungsgemässe Verbindungstechnik lässt sich mit Vorteil in folgenden Bereichen einsetzen: für flexible Transferschläuche, für flüssigen Medientransport, bei welchem Mediendichtheit unbedingt erforderlich ist oder beispielsweise für Kabelschutzrohre bei Fahrzeug-, Flugzeugbau, sowie in der Raumfahrttechnik, bei denen sich nebst rasch herzustellenden Verbindungen, durch den Wegfall von Dichtungen und Muffensystemen Gewichtseinsparungen ermöglichen lassen und Staubdichtheit gewährleistet ist, wobei Formschlüssigkeit gegen Lösen dieser Verbindung wegen Vibrationen oder dynamischen Dauerbeanspruchungen gegeben sein muss. Besonders vorteilhaft lassen sich solche Verbindungen bei flexiblen Kaminauskleidungssystemen auf Basis konvolutierter Rohre zur einfachen, raschen Herstellung gasdichter, korrosionsbeständiger Verbindungen einsetzen. Das Verbindungssystem ist sehr flexibel einsetzbar, leicht in der Handhabung und lässt sich sehr einfach durch Wegfall sämtlicher Dichtungen sowie Muffensysteme herstellen, dadurch ist es auch kostengünstig und durch die mit der mechanisch, thermisch verbundenen Formänderung, das heisst Unterbrechung der Endlosspirale, mediumdicht, selbst unter Druckeinwirkung. Dies gibt eine besonders sichere Verbindung, die den hohen Sicherheitsanforderungen in der Kamintechnik entspricht. Bei Niedertemperaturkaminanwendungen können beispielsweise die konvolutierten Rohre aus den besonders preiswerten Materialien wie PE-Weich oder PP ausgeführt werden. Besonders sichere und einfach zu reinigende Materialien, wegen der schmutzabweisenden Wirkung, sind Fluorkunststoffe wie insbesondere PTFE, FEP, PCTFE, ETFE, PFA, MFA und PVDF.

Für die Kaminanwendung sind neben den allgemein bekannten Fluorkunststoffen die vollfluorierten Kunststoffe wie PTFE, FEP, PFA besonders geeignet da diese gegenüber teilfluorierten Kunststoffen eine besonders tiefe Oberflächenspannung aufweisen und somit eine ausgezeichnete antihaft- und antifilmbildende Eigenschaft aufweisen. Dies ist bei Kaminanwendungen besonders wichtig wegen dem Selbstreinigungseffekt und den reproduzierbaren Betriebseigenschaften. Die Eigenschaften bleiben bei den angegebenen Kunststoffen auch bei hohen Temperaturbelastungen und unter Einwirkung von agressiven Medien, wie Gasen, Flüssigkeiten und Kondensaten erhalten.

Die Erfindung wird nun beispielsweise anhand von Figuren beschrieben. Die Figuren zeigen:
- Fig. 1: Einen Querschnitt schematisch durch eine Rohrverbindung, wobei das Rohranschlussstück aus einem Spritzgussteil besteht.
- Fig. 2: Im Querschnitt und schematisch ein Rohranschlussstück beziehungsweise ein Verbindungsstück aus einem Metalldruckteil, wobei das Gegengewinde konisch dargestellt ist mit degressiver Gewindetiefe und progressiver Steigung.

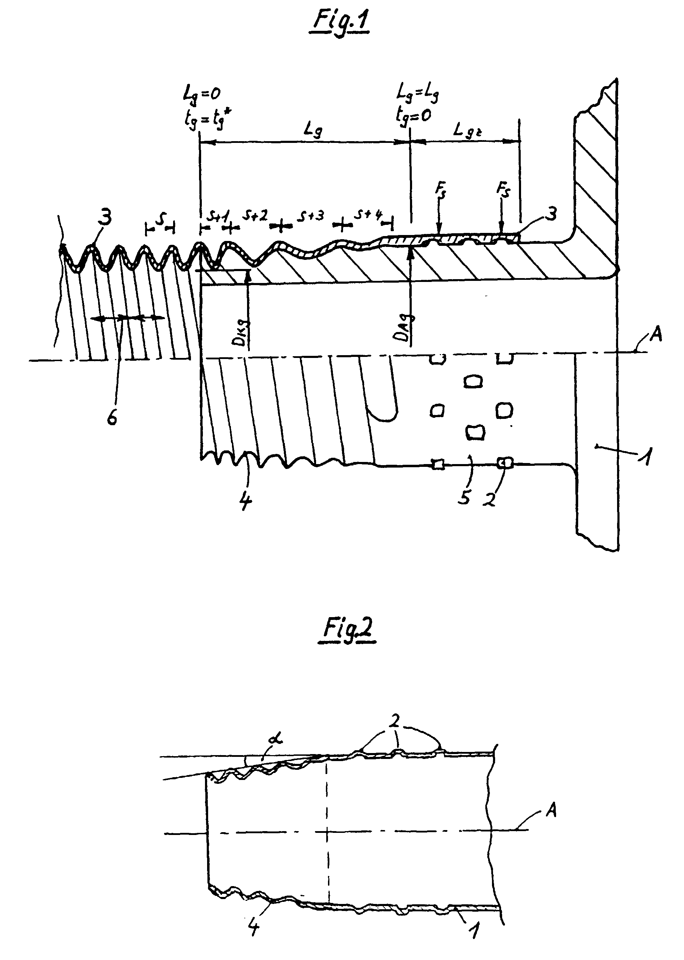

In Figur 1 ist eine erfindungsgemässe Rohrverbindungsanordnung aus einem spiralisierten, konvolutierten Kunststoffrohr 3 mit einem Rohranschlussstück 1 beziehungsweise einem Verbindungsstück, das ein Gegengewinde 4 trägt, dargestellt. Das Rohranschlussstück 1 ist in der Darstellung als rohrförmiges Kunststoffspritzgussteil ausgeführt, welches auf dem einen Rohrende ein Gewinde 4 aufweist mit der Gewindelänge L_{g}, ausgebildet als Gegengewinde zur Aufnahme des spiralierten, konvolutierten Kunststoffrohres 3. Am Ende der Gewindelänge L_{g} schliesst sich eine Glättungszone mit der Länge L_{gz} an, über welche das konvolutierte Kunststoffrohr 3 hinausgedreht wird. Das Rohranschlussstück 1 kann, wie in Figur 1 beispielsweise dargestellt ist, als Flanschstück ausgebildet sein oder als Rohrverbindungsstück zu einem weiteren konvolutierten Kunststoffrohr oder zu einem anderen Anschlusselement. Im oberen Teil der Achse A ist eine Schnittdarstellung durch eine erfinderische Rohrverbindung dargestellt, wobei im unteren Teil der Achse A eine Aufsicht auf das Rohranschlussstück 1 gezeigt ist. Weiter dargestellt sind auf dem Rohranschlussstück 1 über die Länge der Glättungszone L_{gz} gleichmässig versetzt angeordnet, verschiedene Hindernisse in Form von Ausstülpungen dargestellt, welche hier beispielsweise und vorzugsweise als Noppen 2 ausgebildet sind. Diese Noppen 2 verhindern, dass das aufgedrehte und aufgeschrumpfte konvolutierte Kunststoffrohr 3 gegenüber dem Rohranschlussstück 1 verdrehsicher und dichtend fixiert ist. Vorzugsweise ist das Gegengewinde 4 auf dem Rohranschlussstück 1 so ausgebildet, dass bei der Gewindelänge L_{g}=0, das heisst am Anfang des Rohranschlussstückes die Gewindetiefe t_{g} der Gewindetiefe t_{g}* entspricht, welche im wesentlichen korrespondiert mit derjenigen des konvolutierten Kunststoffrohres 3. Nach der Gewindelänge L_{g}, die mehrere Gewindegänge beziehungsweise Steigungen S umfassen, wobei L_{g} vorzugsweise 3 bis 10 Gewindegänge S bis S+ aufweist. Um ein leichtes Eindrehen des konvolutierten Rohres 3 zu ermöglichen, ist es äussert vorteilhaft, wenn das Gegengewinde 4 als Gewinde ausgebildet ist, bei welchem die Gewindetiefe gegen Gewindeende degressiv verläuft, und zwar so, dass die Gewindetiefe zum Gewindeende hin gegen 0 abnimmt (t_{g}=0) und sanft übergeht in die insgesamt flächige Glättungszone Lgz des Rohranschlussstückes 1. Weiterhin ist es aus demselben Grund äusserst vorteilhaft, wenn das Gewinde mit progressiv zunehmender Steigung gegen das Gewindeende L_{g} hin ausgebildet ist, um sich der progressiven Glättungsdeformation des Rohres optimal anzupassen. Dies ist in Figur 1 schematisch und beispielsweise dargestellt mit S+1 bis S+4.

Wie erwähnt korrespondiert der Gewindekerndurchmesser D_{kg} mit dem inneren Durchmesser des konvolutierten Rohres, wobei nachdem das Rohr aufgezogen ist und entsprechend deformiert ist, erweitert sich der Innendurchmesser des konvolutierten Rohres soweit, dass sich dieser dem Aussengewindedurchmesser D_{Ag} beziehungsweise dem Durchmesser des Rohranschlussstückes in der Glättungszone anpasst. Weiterhin sehr vorteilhaft ist, wenn das Gegengewinde 4 leicht konisch ausgebildet ist, wie das in Figur 2 dargestellt ist. Das Rohr kann dann mit besonders gut erzwungener Verstreckung bzw. Formänderung über das Gegengewinde 4 hinaus aufgedreht werden, wenn das Gegengewinde 4 einen Winkel α einschliesst, vorzugsweise in einem Bereich von 0 bis 30°, wie dies in Figur 2 dargestellt ist.

In Figur 2 ist ein Rohranschlussstück 1 im Querschnitt dargestellt, welches aus einem gedrückten Blechteil hergestellt worden ist. Dieses weist ein konisches Gegengewinde 4 auf, wobei dieses mit degressiver Gewindetiefe und progressiver Steigung ausgeführt ist. Ausserdem sind versetzt angeordnet auf der Mantelfläche des Rohrstückes im gewindefreien Teil Noppen 2 zur Sicherung des aufzudrehenden konvolutierten Rohres vorgesehen. Diese Ausführungsform ist besonders einfach und kostengünstig herzustellen und kann beispielsweise aus rostfreiem Stahl hergestellt werden, wie zum Beispiel VA 1.40.16 oder VA 1.43.01 oder VA 1.45.71, wenn hohe chemische Widerstandsfähigkeit gefordert ist wie bei Kaminanwendungen, wobei die Anordnung besonders vorteilhaft ist in der Anwendung zusammen mit Kaminrohrauskleidungen. Zur Reibungsverminderung kann das Rohranschlussstück 1 dort wo das konvolutierte Rohr aufgedreht wird, oder aber auch gesamtheitlich, mit einer Gleitschicht versehen werden, wie aus einem Fluorpolymerkunststoff, welcher vorteilhafterweise mit Dispersionsverfahren oder elektrostatischen Verfahren aufgebracht wird. Als Beschichtungswerkstoffe sind PTFE, FEP oder PFA besonders vorteilhaft. Diese Beschichtungen eignen sich besonders gut für Kaminanwendungen.

Eine weitere vorteilhafte Ausführungsform der Rohrverbindung wird erzielt, wenn die Beschichtung nicht nur als Gleitmittel dient, sondern auch die Funktion eines Haftvermittlers zwischen dem Blechteil und dem konvolutierten Rohr übernimmt. Dies erfolgt dadurch, dass nach dem Aufziehen des Kunststoffrohres das Blechteil erwärmt wird, vorzugsweise induktiv, womit das Rohr mit der Beschichtung verschweisst wird. Da das aufgezogene Rohr am Rohranschlussstück eng anliegt, entsteht eine homogene, flächige Verschweissung. Die Materialwahl für das Rohr und die Beschichtung muss kompatiebel sein, um gute Schweissergebnisse zu erreichen. Eine axiale Sicherung gegen Verdrehen mit beipielsweise noppenartigen Erhebungen an der Aussenfläche des Blechteiles kann bei dieser Ausführungsart entfallen, womit das Rohranschlussstück einfacher herstellbar ist.

Zur Herstellung einer erfindungsgemässen Rohrverbindung wird das konvolutierte Rohr zuerst leicht vorgewärmt bis etwa 30 bis 50°C unter der Haupterweichungstemperatur, so dass es sich einfach deformierend auf das Gegengewinde 4 des Rohranschlussstückes 1 aufdrehen lässt. Das Rohr wird in der Regel von Hand, kann aber auch mit einem klemmenden Halterungswerkzeug auf das Rohranschlussstück 1 aufgedreht werden. Wenn das konvolutierte Rohr 3 bis auf die Glättungszone L_{gz} des Rohranschlussstückes aufgedreht worden ist und sich das Rohr durch mechanische Deformation an das Rohranschlussstück angelegt hat, wird dieses nachträglich entsprechend dem verwendeten Thermoplast so wärmebehandelt, dass dieses auf das Rohranschlussstück 1 mit der radialen Schrumpkraft F_{S} aufschrumpft, womit das Rohr 3 gegenüber dem Rohranschlussstück 1 gesichert und dichtend anliegt. Die vorliegende Verbindung ist besonders einfach und kostengünstig herzustellen und kann ohne Probleme und ohne Spezialwerkzeuge auch direkt am Montageort erfolgen. Hierdurch entsteht eine besonders zuverlässige Verbindung, welche beispielsweise geeignet ist für mediendichte Transferschlauchverbindungen, für Kabelschutzrohre, insbesondere aber für gasdichte und korrosionsbeständige Kaminauskleidungsrohre, die besonders leicht zu reinigen sind und besonders gute und reproduzierbare Betriebsbedingungen gewährleisten, wegen dem Selbstreinigungseffekt, der verwendeten Materialien, wobei das spiralierte Rohr zusätzlich den Ablauf von Kondensaten und Schmutzpartikeln begünstigt. Ein weiterer Vorteil des Rohrleitungs- und Verbindungssytems bei der Kaminanwendung ist der festzustellende lärmdämmende Effekt, der dadurch zustande kommt, dass das spiralierte Kunststoffrohr in axialer Richtung schwingen kann, eine Art Akkordeoneffekt aufweist und somit Antidröhneigenschaften besitzt.

## Patentansprüche

1. Rohrverbindung mit einem auf ein Gegengewinde (4) tragendes Rohranschlussstück (1) aufgeschraubten konvolutierten Kunststoffrohr (3) dadurch gekennzeichnet, dass das Rohr (3) über das Gegengewinde (4) des Rohrstückes (1) hinaus bis auf eine gewindefreie Rohranschlussstückaussenfläche (L_{gz}) aufgedreht ist, wobei der Gewindegang des Rohres (3) mechanisch so deformiert ist, dass dieses im wesentlichen dichtend an der Aussenfläche des gewindefreien Rohrstückes (L_{gz}) formschlüssig anliegt.

2. Rohrverbindung nach Anspruch 1 dadurch gekennzeichnet, dass das konvolutierte Rohrende auf dem Rohranschlussstück (1) thermobehandelt aufgeschrumpft ist, so dass eine dauerhaft dichtende form- und kraftschlüssige Verbindung vorliegt.

3. Rohrverbindung nach Anspruch 2 dadurch gekennzeichnet, dass das Gegengewinde (4) des Rohranschlussstückes (1) konisch ausgebildet ist, vorzugsweise aber einen Winkel (a) von 0 bis 30° einschliesst.

4. Rohrverbindung nach Anspruch 2 oder 3 dadurch gekennzeichnet, dass der gegengewindefreie Teil (L_{gz}) des Rohranschlussstückes (1) an der Aussenfläche (L_{gz}) Erhebungen (2) aufweist zur axialen Sicherung des aufgedrehten konvolutierten Rohres (3), wobei die Erhebungen (2) vorzugsweise ringartig oder rändelartig, insbesondere aber noppenartig auf der Aussenfläche (L_{gz}) des Rohranschlusstückes (1) ausgebildet und angeordnet sind.

5. Rohrverbindung nach einem der vorhergehenden Ansprüche dadurch gekennzeichnet, dass das Rohranschlussstück (1) als gespritztes Vollkunststoff- oder Metallteil oder vorzugsweise als gedrücktes Blechteil ausgeführt ist.

6. Rohrverbindung nach einem der vorhergehenden Ansprüche dadurch gekennzeichnet, dass zwischen dem konvolutierten Rohr und dem Rohranschlussstück (1) ein Gleitmittel eingebracht ist, wie beispielsweise bestehend aus einer Gleitbeschichtung und/oder aus einem temperaturbeständigen Gleitmittel, wobei bei einem Metalldrückteil vorzugsweise eine Fluorpolymerbeschichtung und insbesondere eine PTFE-,FEP- oder PFA- Beschichtung aufgebracht ist und bei einem Kunststoffspritzteil als Gleitmittel ein Gleitadditiv in den Körper eingebracht ist, vorzugsweise ein Fluorpolymermikropulver wie insbesondere ein PTFE-Mikropulver, vorzugsweise mit bis zu maximal 5% Gewichtsanteil.

7. Rohrverbindung nach einem der vorhergehenden Ansprüche dadurch gekennzeichnet, dass das konvolutierte Rohr (3) aus einem Thermoplast wie aus PE-weich oder PP oder PVC besteht, vorzugsweise aber aus einem Fluorkunststoff, wie insbesondere PTFE, PPVE modifiziertes PTFE, FEP (Co- und Terpolymere), PCTFE, ETFE, PFA, MFA, PVDF (Homo- und Copolymere) oder aus deren Kombinationen.

8. Rohrverbindung nach einem der vorhergehenden Ansprüche dadurch gekennzeichnet, dass das konvolutierte Rohr (3) aus PP oder einem Fluorkunststoff besteht, wie insbesondere FEP (Co- und Terpolymere), ETFE, PFA oder PVDF (Homo- und Copolymere) oder aus deren Kombinationen.

9. Verfahren zur Herstellung einer Rohrverbindung mit einem auf ein Gegengewinde (4) tragendes Rohranschlussstück (1) aufgeschraubtem konvolutierten Kunststoffrohr (3) dadurch gekennzeichnet, dass das konvolutierte Rohr (3) über das Gegengewinde (4) des Rohrstückes (1) hinaus bis auf die gewindefreie Rohrstückanschlussfläche (L_{gz}) aufgedreht wird, wobei der Gewindegang des Rohres (3) mechanisch so deformiert wird, dass dieses im wesentlichen dichtend an der Aussenfläche (L_{gz}) des gewindefreien Rohrstückes formschlüssig anliegt.

10. Verfahren nach Anspruch 9 dadurch gekennzeichnet, dass das konvolutierte Rohr (3) vor dem Aufdrehen auf das Rohranschlussstück vorgewärmt wird, vorzugsweise mit einer Temperatur bis zu 30°C, vorzugsweise bis zu 50°C unter der Haupterweichungstemperatur des für das konvolutierte Rohr verwendeten Thermoplastes, wobei die Vorerwärmungszeit kurz ist, vorzugsweise maximal zwei Minuten beträgt.

11. Verfahren nach Anspruch 9 oder 10 dadurch gekennzeichnet, dass das konvolutierte Rohrende, welches auf das rohranschlusstück (1) aufgedreht ist, anschliessend thermobehandelt wird, so dass dieses auf das Rohranschlussstück (1) aufgeschrumpft wird, so dass vorzugsweise eine dauerhafte dichtende form- und kraftschlüssige Verbindung entsteht.

12. Verfahren nach einem der Ansprüche 9 bis 11 dadurch gekennzeichnet, dass das konvolutierte Rohr (3) auf ein konisch ausgebildetes Gegengewinde(4) des Rohranschlussstückes (1) aufgedreht wird, vorzugsweise unter einem einschliessenden Gewindewinkel (α) im Bereich von 0 bis 30°.

13. Verfahren nach einem der Ansprüche 9 bis 12 dadurch gekennzeichnet, dass die Wärmebehandlung des konvolutierten Kunststoffrohres (3) zur Auf schrumpfung und Fixierung auf dem Rohranschlussstück (1) mit einer Temperatur durchgeführt wird, die unter dem Schmelzpunkt des verwendeten Kunststoffes liegt, insbesondere aber 5 bis 10°C unter diesem Schmelzpunkt.

14. Verfahren nach einem der Ansprüche 9 bis 13 dadurch gekennzeichnet, dass das gewindefreie Teil (L_{gz}) des Rohranschlussstückes (1) an der Aussenfläche mit Erhebungen (2) versehen wird zur axialen Sicherung des konvolutierten Rohres (3), wobei die Erhebungen (2) vorzugsweise ringartig oder rändelartig, insbesonder aber noppenartig auf der Aussenfläche (L_{gz}) des Rohranschlussstückes (1) ausgebildet werden.

15. Verfahren nach einem der Ansprüche 9 bis 14 dadurch gekennzeichnet, dass das Rohranschlusstück (1) als Blechteil gedrückt wird.

16. Verfahren nach einem der Ansprüche 9 bis 15 dadurch gekennzeichnet, dass zwischen das konvolutierte Rohr und das Rohranschlussstück ein Gleitmittel eingebracht wird, wobei dieses Gleitmittel beispielsweise als Gleitbeschichtung eingebracht wird oder ein temperaturbeständiges Gleitmittel eingebracht wird, wobei bei einem Metalldrückteil vorzugsweise eine Fluorpolymerbeschichtung und insbesondere eine PTFE-Beschichtung aufgebracht wird und bei einem Kunststoffspritzteil als Gleitmittel ein Gleitadditiv in den Körper eingebracht wird, vorzugsweise ein PTFE-Mikropulver, vorzugsweise mit bis zu maximal 5% Gewichtsanteil.

17. Verfahren nach einem der Ansprüche 9 bis 16 dadurch gekennzeichnet, dass als konvolutiertes Rohr (3) PE-weich oder PP verwendet wird, insbesondere aber ein Fluorkunststoff, wie insbesondere PTFE, PPVE modifiziertes PTFE, FEP (Co- und Terpolymere), PCTFE, ETFE, PFA, MFA, PVDF (Homo- und Copolymere) oder deren Kombinationen.

18. Verfahren nach einem der Ansprüche 9 bis 17 dadurch gekennzeichnet, dass die Rohrverbindung als Kaminrohrverbindung ausgebildet ist, insbesondere unter Verwendung eines konvolutierten Kunststoffrohres (3) aus PP oder einem Fluorkunststoff, wie insbesondere aus FEP (Co- und Terpolymere), ETFE, PFA oder PVDF (Homo- und Copolymere) oder aus deren Kombinationen.

19. Verwendung der Rohrverbindung nach einem der vorhergehenden Ansprüche 1 bis 18 für mediendichte Transferschläuche, Kabelschutzrohre, insbesondere für gasdichte und beständige Kaminauskleidungsrohre.

## Claims

1. Pipe joint with a convoluted plastic pipe (3) screwed onto a pipe connecting section (1) featuring a counterthread (4), characterized in that pipe (3) is wound up beyond counterthread (4) of pipe section (1) as far as an unthreaded outer surface of the pipe connecting section (L_{gz}), whereby the thread course of pipe (3) is mechanically deformed in such a way that it abuts with a form-fit on the outer surface of unthreaded pipe section (L_{gz}), essentially performing a sealing action.

2. Pipe joint according to claim 1, characterized in that the convoluted pipe end is shrunk on pipe connecting section (1) by thermal treatment, thus creating a form and force-fit connection with permanent sealing action.

3. Pipe joint according to claim 2, characterized in that the counterthread (4) of pipe connecting section (1) is conical in shape, preferably enclosing an angle (α) of 0 to 30°.

4. Pipe joint according to claim 2 or 3, characterized in that the unthreaded section (L_{gz}) of pipe connecting section (1) features elevations (2) on outer surface (L_{gz}) for securing wound-on convoluted pipe (3) axially, whereby elevations (2) are preferably shaped and arranged in annular or knurled form, and in particular in the form of nubs on outer surface (L_{gz}) of pipe connecting section (1).

5. Pipe joint according to any preceding claim, characterized in that the pipe connecting section (1) is in the form of an extruded solid plastic or metal component or preferably as a pressed sheet metal component.

6. Pipe joint according to any preceding claim, characterized in that a lubricant is inserted between the convoluted pipe and pipe connecting section (1), for example consisting of a slip coating and/or a temperature-resistant lubricant, whereby a fluoropolymer coating, especially a PTFE, FEP or PFA coating, is preferably applied in the case of a pressed metal component, and a slip additive is included in the body as a lubricant, preferably a fluoropolymer micropowder, such as in particular a PTFE micropowder, preferably in a proportion of up to 5% by weight, in the case of a plastic extruded component.

7. Pipe joint according to any preceding claim, characterized in that the convoluted pipe (3) is made from a thermoplastic such as plasticized PE or PP or PVC, preferably of a fluoroplastic, such as in particular PTFE, PPVE modified PTFE, FEP (copolymers and terpolymers), PCTFE, ETFE, PFA, MFA, PVDF (homopolymers and copolymers) or combinations thereof.

8. Pipe joint according to any preceding claim, characterized in that the convoluted pipe (3) is made from PP or a fluoroplastic, such as in particular FEP (copolymers and terpolymers), ETFE, PFA or PVDF (homopolymers and copolymers) or combinations thereof.

9. Process for manufacturing a pipe joint with a convoluted plastic pipe (3) screwed onto a pipe connecting section (1) featuring a counterthread (4), characterized in that the convoluted pipe (3) is wound up beyond counterthread (4) of pipe section (1) as far as the unthreaded outer surface of the pipe connecting section (L_{gz}), whereby the thread course of pipe (3) is mechanically deformed in such a way that it abuts with a form-fit on the outer surface (L_{gz}) of the unthreaded pipe section, essentially performing a sealing action.

10. Process according to claim 9, characterized in that the convoluted pipe (3) is preheated before being wound onto the pipe connecting section, preferably with a temperature of up to 30°C, preferably up to 50°C below the main softening temperature of the thermoplastic used for the convoluted pipe, whereby the preheating time is short, preferably lasting no more than two minutes.

11. Process according to claim 9 or 10, characterized in that the convoluted pipe end that is wound onto pipe connecting section (1) is subsequently heat treated so that it is shrunk onto pipe connecting section (1), preferably producing a form and force-fit connection with permanent sealing action.

12. Process according to one of the claims 9 to 11, characterized in that the convoluted pipe (3) is wound onto a conically shaped counterthread (4) of pipe connecting section (1), preferably under an enclosing thread angle (α) in the range of 0 to 30°.

13. Process according to one of the claims 9 to 12, characterized in that the heat treatment of convoluted plastic pipe (3) for shrinking and fixing it on pipe connecting section (1) is performed at a temperature below the melting point of the plastic used, in particular 5 to 10°C below this melting point.

14. Process according to one of the claims 9 to 13, characterized in that the unthreaded section (L_{gz}) of pipe connecting section (1) features elevations (2) on its outer surface for securing convoluted pipe (3) axially, whereby elevations (2) are preferably annular or knurled in shape, and in particular in the form of nubs on outer surface (L_{gz}) of pipe connecting section (1).

15. Process according to one of the claims 9 to 14, characterized in that the pipe connecting section (1) is pressed as a sheet metal component.

16. Process according to one of the claims 9 to 15, characterized in that a lubricant is inserted between the convoluted pipe and the pipe connecting section, whereby this lubricant is incorporated for example as a slip coating or a temperature-resistant lubricant, whereby a fluoropolymer coating, especially a PTFE coating, is preferably applied in the case of a pressed metal component, and a slip additive is included in the body as a lubricant, preferably a PTFE micropowder, preferably in a proportion of up to 5% by weight, in the case of a plastic extruded component.

17. Process according to one of the claims 9 to 16, characterized in that plasticized PE or PP is used for convoluted pipe (3), and in particular a fluoroplastic, such as in particular PTFE, PPVE modified PTFE, FEP (copolymers and terpolymers), PCTFE, ETFE, PFA, MFA, PVDF (homopolymers and copolymers) or combinations thereof.

18. Process according to one of the claims 9 to 17, characterized in that the pipe joint is designed as a flue pipe joint, in particular using a convoluted plastic pipe (3) made from PP or a fluoroplastic, such as in particular FEP (copolymers and terpolymers), ETFE, PFA or PVDF (homopolymers and copolymers) or combinations thereof.

19. Use of the pipe joint according to any preceding claim 1 to 18 for leakproof transfer hoses, cable protection pipes, in particular for gas-tight and resistant flue lining pipes.

## Revendications

1. Raccord de canalisations comprenant une gaine de matière plastique tubulaire convolutée (3) vissée sur une pièce de raccordement de tuyaux (1) portant un filet contraire (4), caractérisé en ce que la gaine (3) est écartée en la vissant au-delà du filet contraire (4) du bout de tuyau (1) jusqu'à une face extérieure (L_{gs}) de la pièce de raccord de canalisations dépourvue de filetage, à la suite de quoi le pas de vis de la gaine (3) est déformé mécaniquement de telle façon que celle-ci vient se positionner de manière sensiblement jointive et en assurant une fermeture géométrique contre la face extérieure du bout de tuyau (L_{gs}) dépourvu de filetage.

2. Raccord de canalisations selon la revendication 1, caractérisé en ce que l'extrémité convolutée de la gaine est rétractée par traitement thermique sur le bout de raccord de tuyau (1), de telle sorte qu'il s'établisse une liaison par adaptation de forme et par adhérence assurant une étanchéification durable.

3. Raccord de canalisations selon la revendication 2, caractérisé en ce que le filet contraire (4) de la pièce de raccordement pour tuyau (1) est de configuration conique, mais inclut de préférence un angle (α) de 0 à 30°.

4. Raccord de canalisations selon la revendication 2 ou 3, caractérisé en ce que la partie (L_{gs}) de la pièce de raccord de canalisations (1) ne présentant pas de filet contraire présente sur sa face extérieure (L_{gs}) des reliefs (2) participant au calage axial de la gaine convolutée écartée en la vissant (3), les reliefs (2) étant réalisés et disposés de préférence sous forme d'anneaux ou de moletage, mais en particulier de boutons, sur la face extérieure (L_{gs}) de la pièce de raccord de canalisations (1).

5. Raccord de canalisations selon l'une des revendications qui précèdent, caractérisé en ce que la pièce de raccord de canalisations (1) est réalisée sous forme de pièce de plastique plein extrudée ou de métal extrudée ou, de préférence, sous forme de pièce de tôle comprimée.

6. Raccord de canalisations selon l'une des revendications qui précèdent, caractérisé en ce qu'entre la gaine convolutée et la pièce de raccord de canalisations (1), on incorpore un agent antifriction, tel que constitué par exemple d'un revêtement antifriction et/ou d'un agent antifriction tenant à la température, le revêtement appliqué étant de préférence, dans le cas d'une pièce métallique comprimée, un revêtement de fluoropolymère et en particulier un revêtement de PTFE, FEP ou PFA, et l'agent antifriction utilisé dans le cas d'une pièce en plastique extrudée étant un additif antifriction incorporé dans la structure, de préférence une micropoudre de fluoropolymère comme, en particulier, une micropoudre de PTFE, de préférence à raison de 5 % en poids, au maximum.

7. Raccord de canalisations selon l'une des revendications qui précèdent, caractérisé en ce que la gaine convolutée (3) se compose d'un thermoplastique tel que du PE tendre ou du PP ou du PVC, mais de préférence d'un plastique fluoré comme notamment le PTFE, le PTFE modifié au PPVE, le FEP (co- et terpolymères), le PCTFE, l'ETFE, le PFA, le MFA, le PVDF (homo- et copolymères) ou leurs combinaisons.

8. Raccord de canalisations selon l'une des revendications qui précèdent, caractérisé en ce que la gaine convolutée (3) est fabriquée en PP ou dans un plastique fluoré comme, en particulier, le FEP (co- et terpolymères), l'ETFE, le PFA, ou le PVDF (homo- et copolymères) ou leurs combinaisons.

9. Procédé de fabrication d'un raccord de canalisations comprenant un tube de matière plastique convoluté (3) vissé sur une pièce de raccordement pour tuyaux (1) portant un filet contraire (4), caractérisé en ce que la gaine convolutée (3) est écartée en la vissant au-delà du filetage contraire (4) du bout de tuyau (1), jusqu'à la face de raccordement du bout de tuyau (L_{gs}) dépourvue de filetage, à la suite de quoi le pas de vis de la gaine (3) est déformé mécaniquement de façon telle que celle-ci vient se positionner de manière sensiblement jointive et en assurant une fermeture géométrique contre la face extérieure (L_{gs}) du bout de tuyau (1) sans filetage.

10. Procédé selon la revendication 9, caractérisé en ce que la gaine convolutée (3) est préchauffée avant d'être vissée sur la pièce de raccordement de tuyau, de préférence à une température allant jusqu'à 30 °C, de préférence jusqu'à 50 °C sous la température de ramollissement principale du thermoplastique utilisé pour la gaine convolutée, le temps de préchauffage étant court, de préférence de deux minutes maximum.

11. Procédé selon la revendication 9 ou 10, caractérisé en ce que l'extrémité de la gaine convolutée qui est écartée en la vissant sur la pièce de raccordement de tuyau (1) est ensuite soumise à un traitement thermique en sorte qu'elle se rétracte sur le bout de raccord de tuyau (1), si bien qu'il s'établit de préférence une liaison assurant une étanchéification durable par adaptation de forme et adhérence.

12. Procédé selon l'une des revendications 9 à 11, caractérisé en ce que la gaine convolutée (3) est vissé dans le sens droite-gauche sur un filet contraire (4) de configuration conique de la pièce de raccord de tuyau (1), de préférence sous un angle de filetage inclus (α) de l'ordre de 0 à 30°.

13. Procédé selon l'une des revendications 9 à 12, caractérisé en ce que le traitement thermique de la gaine de matière plastique convolutée (3) tendant à sa contraction et à sa fixation sur la pièce de raccordement de tuyau (1) est exécuté à une température qui se situe sous le point de fusion de la matière plastique mise en oeuvre, mais en particulier de 5 à 10 °C en dessous de ce point de fusion.

14. Procédé selon l'une des revendications 9 à 13, caractérisé en ce que la partie (L_{gs}) dépourvue de filet contraire de la pièce de raccordement de tuyau (1) présente sur sa face extérieure (L_{gs}) des reliefs (2) participant au calage axial de la gaine convolutée (3), les reliefs (2) étant réalisés et disposés de préférence sous forme d'anneaux ou de moletage, mais en particulier de boutons, sur la face extérieure (L_{gs}) de la pièce de raccord de canalisations (1).

15. Procédé selon l'une des revendications 9 à 14, caractérisé en ce que le pièce de raccordement de tuyaux (1) est une pièce de tôle comprimée.

16. Procédé selon l'une des revendications 9 à 15, caractérisé en ce qu'entre la gaine convolutée et la pièce de raccord de canalisations (1), on incorpore un agent antifriction, cet agent antifriction étant incorporé par exemple sous forme d'un revêtement antifriction ou on incorpore un agent antifriction tenant à la température, le revêtement appliqué étant de préférence, dans le cas d'une pièce métallique comprimée, un revêtement de fluoropolymère et en particulier un revêtement de PTFE, et l'agent antifriction utilisé dans le cas d'une pièce en plastique extrudée étant un additif antifriction incorporé dans la structure, de préférence une micropoudre de PTFE, de préférence à raison de 5 % en poids, au maximum.

17. Procédé selon l'une des revendications 9 à 16, caractérisé en ce que pour la gaine convolutée (3) on utilise du PE tendre ou du PP, mais de préférence un plastique fluoré comme notamment le PTFE, le PTFE modifié au PPVE, le FEP (co- et terpolymères), le PCTFE, l'ETFE, le PFA, le MFA, le PVDF (homo- et copolymères) ou leurs combinaisons.

18. Procédé selon l'une des revendications 9 à 17, caractérisé en ce que le raccord de canalisations est conçu pour servir de liaison à la gaine de cheminée, en particulier avec utilisation d'une gaine de matière plastique convolutée (3) en PP ou en matière plastique fluorée, comme notamment en FEP (co- et terpolymères), ETFE, PFA ou PVDF (homo- et copolymères) ou leurs combinaisons.

19. Mise en oeuvre du raccord de canalisations selon l'une des revendications précédentes 1 à 18, pour gaines de transfert étanches aux fluides, gaines de protection pour câbles, en particulier pour tubages de cheminées étanches et résistants aux gaz.
